# EUROPÄISCHE PATENTSCHRIFT

(11) **EP 1 025 045 B1**
(45) Veröffentlichungstag und Bekanntmachung des Hinweises auf die Patenterteilung: **27.02.2013**
(21) Anmeldenummer: 99952321.0
(22) Anmeldetag: 05.08.1999
(51) Int. Cl.: C01F 7/44, C01F 7/02

(54) **BÖHMITISCHE TONERDEN UND AUS DIESEN ERHÄLTLICHE PHASENREINE HOCHTEMPERATURSTABILE UND HOCHPORÖSE ALUMINIUMOXIDE**
BOEHMITIC ALUMINAS, AND HIGH-TEMPERATURE STABILE AND HIGHLY POROUS ALUMINUM OXIDES IN A PURE PHASE WHICH ARE OBTAINED THEREFROM
ALUMINES A BOEHMITE ET OXYDES D'ALUMINIUM A PHASES PURES, STABLES AUX TEMPERATURES ELEVEES ET FORTEMENT POREUSES POUVANT ETRE OBTENUES A PARTIR DE CES ALUMINES

(30) Priorität: 14.08.1998 DE 19836821
(43) Veröffentlichungstag der Anmeldung: 09.08.2000
(60) Teilanmeldung: 10012099.7
(73) Patentinhaber: SASOL Germany GmbH, 20537 Hamburg (DE)
(72) Erfinder: NOWECK, Klaus, D-25541 Brunsbüttel (DE); MEYER, Arnold, D-25693 St. Michaelisdonn (DE); GLÖCKLER, Reiner, D-25541 Brunsbüttel (DE); BOHNEN, Frank, Michael, D-25541 Brunsbüttel (DE); JUHL, Jens, D-25528 Itzehoe (DE); SCHIMANSKI, Jürgen, D-25541 Brunsbüttel (DE)
(74) Vertreter: Müller Schupfner & Partner
(86) Internationale Anmeldenummer: PCT/DE1999/002464
(87) Internationale Veröffentlichungsnummer: WO 2000/009445

(56) Entgegenhaltungen:
- EP-A- 0 514 229
- EP-A1- 0 709 222
- EP-A1- 0 726 877
- EP-A1- 0 810 101
- WO-A-92/19536
- DE-A- 2 349 972
- DE-C- 3 823 895
- US-A- 4 055 509
- US-A- 4 081 353
- US-A- 4 117 106
- US-A- 4 360 449
- US-A- 4 676 928
- US-A- 4 744 974
- US-A- 4 797 139
- US-B1- 6 262 132

## Beschreibung

Die Erfindung betrifft kristalline böhmitische Tonerden, deren Kristallite ungewöhnliche Differenzen der Abmessungen in den Raumrichtungen 020 und 120 aufweisen, ein Verfahren zur ihrer Herstellung sowie aus diesen durch Calcinieren erhältliche Folgeprodukte.

Die Strukturbeziehungen der unterschiedlichen Aluminiumoxide und -hydroxide ist sehr komplex. Man unterscheidet im wesentlichen zwischen α-Al₂O₃ (Korund), α-AlO(OH) (Diaspor), α-Al(OH)₃ (gelegentlich auch als β- Al(OH)₃ bezeichnet, Bayerit oder Bauxit-Dihydrat), γ-AlO₃ , γ-AlO(OH) (Böhmit) und γ- Al(OH)₃ (gelegentlich auch als α- Al(OH)₃ bezeichnet, Gibbsit, Hydrargillit). Daneben existieren noch eine Vielzahl anderer Modifikationen, insbesondere Modifikationen unterschiedlicher Aluminiumoxide, die durch thermischen Abbau der Aluminiumhydroxide oder Aluminiumoxidhydrate erhältlich sind. Es wird z.B. allgemein angenommen, daß sich böhmitische Tonerde unter Temperatureinfluß wie folgt umwandelt:

Böhmit → γ(gamma)-Al₂O₃ → δ (delta)-Al₂O₃→ θ (theta)-Al₂O₃ → α (alpha)-Al₂O₃

Die unterschiedlichen Aluminiumoxide, Aluminiumoxidhydrate (teilweise auch als Aluminiumoxidhydroxide bezeichnet) und Aluminiumhydroxide werden in der Literatur insbesondere hinsichtlich der vorangestellten griechischen Buchstaben nicht einheitlich bezeichnet. Unter böhmitischen Tonerden im Sinne der Erfindung werden böhmitische und pseudo-böhmitische Tonerden verstanden.

Böhmitische Tonerden sind bekannt. Hochreine böhmitische Tonerden sind z.B. durch kontrollierte Hydrolyse von Aluminiumalkoxiden erhältlich. Hierbei werden Aluminiumhydroxid - Hydrogele erhalten, die z.B. in Form des rhombisch kristallinen Aluminiumoxidhydrats (γ-AlO(OH) ,böhmitische Tonerde) kristallisieren.

Aus der Literatur sind bereits Böhmit- oder Pseudoboehmit - Teilchen bekannt, welche Abmessungen der Raumrichtungen d(020) aufweisen, die denen der Raumrichtung d(021) bzw. d(120) ähnlich sind. So offenbaren z.B. die US-A-4,360,449, die US-A-4,744,974 und die US-A-4,117,106 derartige Tonerdehydrate. Stets ist jedoch die Kristallitgröße gemessen am 120 Reflex um deutlich mehr als 0,5 nm größer als die Kristallitgröße gemessen am 020 Reflex.

Die DE 38 23 895-C1 offenbart ein Verfahren zur Herstellung von böhmitischen Tonerden mit im Bereich von 3 bis 100 nm kontrolliert einstellbaren Porenradien. Nach diesem Verfahren werden die böhmitischen Tonerden einer hydrothermalen Alterung bei einem Wasserdampfdruck von 1 bis 30 bar entsprechend einer Temperatur von 100 bis 235°C für einen Zeitraum von 0,5 bis 20 h unter Rühren mit einer Umfangsgeschwindigkeit von 1 bis 6 s⁻¹ unterzogen. Diese Tonerden sowie die nach anderen Verfahren erhältlichen bohmitischen Tonerden weisen eine Kristallitgröße gemessen am 020 - Reflex auf, die stets um mindestens 2 nm kleiner ist als die Kristallitgröße gemessen am 120 - Reflex. Auch in der US 3,898,322 wird ein Verfahren zur Herstellung hydrothermal gealterter "Alumina-Aufschlämmung" beschrieben. Hierbei wird die wässrige Aluminiumhydroxid/Aluminiumoxidhydrat-Aufschlämmung, wie sie aus der Hydrolyse von Aluminiumalkoxiden erhältlich ist, einer hydrothermalen Alterung bei Raumtemperatur über 2 bis 60 h ausgesetzt.

Aufgabe der Erfindung ist es, böhmitische und/oder pseudo-böhmitische Tonerden ungewöhnlicher Morphologie zugänglich zu machen. Weiterhin ist es Aufgabe der Erfindung, ungewöhnlich hochtemperaturstabile Aluminiumoxide bereitzustellen, die zudem nach entsprechender Kalzinierung ungewöhnlich große Oberflächen und große Porenvolumina aufweisen.

Die Aufgabe der Erfindung wird gelöst durch kristalline böhmitische und/oder pseudo-böhmitische Tonerde, deren Kristallitgröße bestimmt am 020 - Reflex in nm größer als die um 0,5 nm, verminderte, gemessene Kristallitgröße bestimmt am 120 - Reflex ist, wobei die Kristallitgröße gemessen am 020 - Reflex 6 nm und größer beträgt. Besonders bevorzugt ist die Kristallitgröße bestimmt am 020-Reflex in nm größer als die Kristallitgröße bestimmt am 120 - Reflex in nm.

Gegenstand der Erfindung sind weiterhin Verfahren zur Herstellung der erfindungsgemäßen kristallinen böhmitischen und/oder pseudo-böhmitischen Tonerden.

Die Ausgangsverbindung zur Herstellung der erfindungsgemäßen kristallinen böhmitischen und/oder pseudo-böhmitischen Tonerden sind herkömmliche, d.h. kristalline, teilkristalline oder amorphe, Aluminium-Sauerstoff-Verbindungen wie Aluminiumoxidhydrate, Aluminiumhydroxide oder Gemische dieser Verbindungen mit Aluminiumoxiden, vorzugsweise herkömmliche pseudo-böhmitische und/oder böhmitische Tonerden. Werden handelsübliche, nach anderen Verfahren hergestellte Aluminium-Sauerstoff-Verbindungen eingesetzt oder wird die böhmitische Tonerde nicht hergestellt und unmittelbar, z.B. als Hydrogel, eingesetzt, werden die Aluminium-Sauerstoff-Verbindungen vor der erfindungsgemäßen Alterung vorzugsweise einem Mahlprozeß unterworfen.

Die Ausgangsverbindungen sind vorzugsweise durch Hydrolyse von Aluminiumalkoxiden von C1 bis C24+ Alkoholen oder deren Gemischen zugängliche Aluminiumoxidhydrate (bzw. Aluminiumoxidhydroxide). Die Aluminiumalkoxide können z.B. nach dem Ziegler-Verfahren hergestellt sein. Die Aluminiumalkoxide werden in einer wäßrigen Umgebung hydrolysiert. Die Hydrolyse kann allgemein in einem Temperaturbereich von 30 bis 150°C und vorzugsweise bei 60 bis 100°C durchgeführt werden. Hiernach trennt man die gebildete Aluminiumoxidhydrat-Aufschlämmung von der wäßrigen Alkoholphase ab. Die Tonerde- / Wasserphase kann z.B. Tonerdehydrat mit einem Al₂O₃-Gehalt von 5 bis 12 Gew.%, vorzugsweise 10 bis 11 Gew.% Al₂O₃ enthalten.

Die Aluminium-Sauerstoff-Verbindungen als Ausgangsprodukte können aber auch aus natürlichen Vorkommen stammen oder nach anderen Verfahren, z.B. dem Amalgam - Verfahren, erhalten worden sein.

Die erfindungsgemäßen kristallinen böhmitischen Tonerden lassen sich durch eine hydrothermale Langzeitalterung von Sauerstoff-Verbindungen des Aluminiums, insbesondere Aluminiumoxidhydate, in Gegenwart von Wasser bei 60 bis 240°C, vorzugsweise 70 bis 160°C, besonders bevorzugt bei 70 bis 110°C über zumindest 20 h, besonders bevorzugt zumindest 24 bis 70 h oder 30 bis 60 h, herstellen. Bei der Herstellung wird vorzugsweise eine geringe Scherwirkung auf die Aluminiumoxidhydrat-Aufschlämmung ausgeübt. Eine geringe Scherwirkung im Sinne der Erfindung ist die Scherwirkung, die von einem Rührer (z.B. einem Propellerrührer) ausgeübt wird, der mit einer Umfangsgeschwindigkeit von 0,5 bis 3 m/s betrieben wird Die Pärtikelgröße der eingesetzten Aluminiumoxidhydräte in der Aufschlämmung beträgt vorzugsweise 1 bis 12 µm (Mikrometer), besonders bevorzugt 6 bis 12 µm.

Die erfindungsgemäßen kristallinen böhmitischen Tonerden lassen sich nach einer zweiten Ausführungsform der Erfindung durch eine hydrothermale Alterung in Gegenwart von Wasser und zumindest zweikernigen, vorzugsweise zumindest dreikernigen, Basen, wobei die Basen vorzugsweise Stickstoffbasen sind, bei 30 bis 240°C, vorzugsweise bei 70 bis 160°C, für 0,5 bis 170 h herstellen. Exemplarisch seien Diethylentriamin, Dipropylentriamin, Triethylentetramin (Trien), Tetraethylenpentamin (Tetren), und Pentaethylenhexamin (Pentren) genannt.

Vorzugsweise sind die erfindungsgemäßen kristallinen böhmitischen Tonerden oder die hieraus erhältlichen Aluminiumoxide frei von Fremdatomen, insbesondere anderen Metallatomen (einschließlich Silizium und Phosphor), d.h. sie bestehen zu größer 99 Atom%, vorzugsweise zu größer 99,9 Atom%, ausschließlich aus Aluminium, Sauerstoff und/oder Wasserstoff

Vorzugsweise weisen die erfindungsgemäßen kristallinen böhmitischen Tonerden unabhängig voneinander die folgenden Eigenschaften auf Porenvolumina von größer 0,8 cm³/g, vorzugsweise von größer 0,9 cm³/g, Kritallitgrößen bestimmt am 020 Reflex von größer 10 nm, vorzugsweise größer 12 nm, und Oberflächen von größer 150 m² , vorzugsweise von 150 bis 200 m². Wobei die nach der dritten Verfahrensvariante hergestellten erfindungsgemäßen kristallinen böhmitischen Tonerden in Unterschied unabhängig voneinander vorzugsweise die folgenden Eigenschaften aufweisen: Porenvolumina von größer 0,7 cm³/g, vorzugsweise von größer 0,9 cm³/g, Kritallitgrößen bestimmt am 020 Reflex von etwa 6 bis 10 nm, und Oberflächen von größer 200 m². Gegenstand der Erfindung sind weiterhin aus den erfindungsgemäßen kristallinen Tonerden durch eine Temperaturbehandlung über 150°C, vorzugsweise durch Calcinieren bei einer Temperatur von 800 bis 1500°C für zumindest 0,5 h, zugängliche Aluminiumoxide. Diese Aluminiumoxide zeichnen sich durch besonders große Oberflächen, großen Porenvolumina und hervorragende Hochtemperaturstabilität aus. Temperaturstabil heißt stabil gegenüber durch äußere Einflüsse wie Wasser, Chemikalien, Druck oder mechanische Beanspruchung und Temperatur auf der anderen Seite hervorrufbare Veränderungen in der Oberfläche und kristallinen Phase.

Weiterhin sind die erfindungsgemäßen Aluminiumoxidhydrate und Aluminiumoxide phasenrein und phasenstabil und liegen je nach Calcinierungstemperatur und Dauer in der Delta-, Theta- oder Alpha- Modifikation vor. In diesem Zusammenhang wird auf die Tabellen 1, 2 und 3 verwiesen, in denen Pulverdiffraktogramm-Daten der unterschiedlichen erfindungsgemäßen Aluminiumoxide wiedergegeben sind.

Phasenrein im Sinne der Erfindung heißt, daß das kristalline Aluminiumoxid zu größer 90 Gew.%, vorzugsweise zu größer 98 Gew. % - bestimmt mit Hilfe eines Röntgenpulverdiffraktogrammes - aus nur einer Phase besteht Die erfindungsgemäßen Theta-Aluminiumoxide liegen phasenrein vor, wenn insbesondere in den unten in Å angegebenen d-Wert-Bereichen keine für α-Al₂O₃ charakteristischen Peaks im Röntgenpulverdiffraktogramm vorliegen.

Hinsichtlich der Pulverröntgendiffraktogramm-Daten konventioneller Aluminiumoxide kann auf die entsprechenden JCPDS-Karten (U.S. National Bureau of Standards) für Korund (α-Al₂O₃), Delta- und Theta-Aluminiumoxid verwiesen werden

Phasenstabil im Sinne der Erfindung heißt, daß sich die kristalline Phase auch unter Einfluß einer langanhaltenden Temperaturbehandlung bei oder unterhalb der Temperatur, die bei der Herstellung dieses Aluminiumoxides durch Calcinierung verwendet wurde, nicht verändert.

Weiterhin sind die erfindungsgemäßen Aluminiumoxide temperaturstabil und weisen im Unterschied zu herkömmlichen Aluminiumoxiden auch nach einer Temperaturbehandlung durch Calcinierung bei 1200°C über 3 h noch eine Oberfläche von größer 60 m²/g, vorzugsweise größer 70 m²/g, auf. Die Calcinierung wird in einer Luft-Atmosphäre im Muffelofen durchgeführt.

Die erfindungsgemäßen Aluminiumoxide weisen weiterhin Porenvolumina bestimmt mit Hilfe der Quecksilberpenetrationsmethode (nach DIN 66 133) im Porenradienbereich von 1,8 bis 100 nm von größer 0,6 cm³/g, vorzugsweise von 0,7 bis 1 cm³/g, auf Diese Eigenschaft bleibt auch nach einer Temperaturbehandlung der erfindungsgemäßen Aluminiumoxide bei 1100°C über 24h erhalten. Konventionelle Aluminiumoxide, die etwa durch Calcinieren von Bayerit zugänglich sind, weisen wesentlich geringere Porenvolumina auf (etwa 0,2 bis 0,4 cm³/g).

Die erfindungsgemäßen Aluminiumoxide eignen sich hervorragend als Katalysator oder Katalysatorträgermaterial, insbesondere als Katalysatorträgermaterial für Autoabgaskatalysatoren. In diesem Fall ist das Katalysatorträgermaterial mit EdelmetallKatalysatoren wie Platin oder Palladium behandelt.

Bei Verwendung der erfindungsgemäßen Aluminiumoxide ist es möglich, den Katalysator bzw. den Katalysatorträger in dünnen und auch unter hoher Temperaturbelastung , z.B. über 1000°C , stabilen Schichten einzusetzen. Dies ist z.B. für Abgaskatalysatoren von großem Vorteil. Weiterhin kann in vielen Fällen auf die in der Technik eingesetzten Stabilisierungshilfen, wie etwa Lanthanoxide oder SiO₂ , verzichtet werden. Stabilisierungshilfen aus Metalloxiden können das katalytische Verhalten des Al₂O₃- Katalysators bzw. Katalysatorträgers negativ beeinflussen.

Die Ermittlung der Kristallitgrößen der erfindungsgemäßen böhmitischen Tonerden erfolgte am 120 - und 020 - Reflex über die allgemeine Scherrer-Formel:

| Kristallitgröße = (K x Lambda x 57,3)/(Beta x cos Theta) | |
|---|---|
| K (Formfaktor): | 0,992 |
| Lambda (Wellenlänge der Röntgenstrahlung): | 0,154 nm |
| Beta (korrigierte apparative Linienverbreiterung): | reflexabhängig |
| Theta | reflexabhängig |

Die Messungen wurden an einem XRD-Gerät der Firma Philips Typ X'pert durchgeführt. Die Meßparameter der Messungen der Proben nach Beispiel 1 (Vergleichsbeispiel) und nach Beispiel 2 sind in Tabelle 1 bzw. Tabelle 2 wiedergegeben.

Die Reflexe 120 und 020 (Miller Indices) wurden am Böhmit bestimmt und beziehen sich auf die nicht-konventionelle kristallographische Aufstellung Amam der orthorhombischen Raumgruppe Nr. 63. Die konventionelle Aufstellung lautet Cmcn. Hierbei sind gegenüber der nicht-konventionellen Aufstellung Amam die a- und c- Achse vertauscht.

Die Oberflächengröße der erfindungsgemäßen Aluminiumoxide wurde mit Hilfe einer N₂-Sorptionsanalytik nach BET bestimmt (nach DIN 66131). Die Porenvolumina bzw. die Porenvolumenverteilung wurde mit Hilfe der Quecksilberintrusion (Quecksilberpenetrationsmethode) unter Verwendung eines Quecksilber-Porosimeters bestimmt (nach DIN 66 133). Die Angabe der Porenvolumina erfolgt in cm³/g als kumuliertes Volumen gemäß DIN 66 133.

### Beispiel 1 (Vergleichsbeispiel)

Als Ausgangsprodukt wurde eine Tonerdeaufschlämmung aus der neutralen Aluminiumalkoholathydrolyse wie folgt hergestellt:
Es wurde ein Aluminiumalkoholatgemisch, wie es bei der Synthese des Ziegler/Alfol-Prozesses als Zwischenprodukt anfällt, mit Wasser, welches mittels einer Vollentsalzungsanlage frei von Fremdionen aufbereitet worden war, bei 90°C in einem Rührkessel hydrolysiert Dabei bildeten sich zwei nicht mischbare Phasen, nämlich eine obere Alkoholphase und eine untere Tonerde/Wasserphase.

500g dieser 10 bis 11 Gew.-% Al₂O₃ enthaltenden Tonerdeaufschlämmung, welche einen pH-Wert von 9 aufwies, wurden bei absatzweisem Betrieb in einem Reaktor gegeben, und zwar bei einem Reaktordruck von 3 bar entsprechend 115°C. Es wurde nach Einstellung der Reaktionsbedingungen 4 h mit einem üblichen Rührwerk mit einer Umfangsgeschwindigkeit von 1,6 m/s entsprechend einer Rührerdrehzahl von 500 U/min gealtert.

Im Vergleichsbeispiel wurden folgende Werte erhalten:

| **Reflex** | **Beta** | **Theta** | **Kristallitgröße** |
|---|---|---|---|
| 120 | 0,919 | 14° | 9,8 nm |
| 020 | 0,919 | 7° | 6,7 nm |

Der 120 - Reflex ist um 3,1 nm größer als der 020 - Reflex.

Die Bestimmung der spezifischen Oberfläche erfolgte über eine N₂-Sorptionsanalytik nach BET. Die spezifische Oberfläche nach einer Temperaturbehandlung über 3h bei 1200°C betrug 46 m²/g. Das Röntgenpulverdiffraktogramm dieser Probe ist in Tabelle 1 wiedergegeben und weist deutliche Signale der Alpha-Phase auf.

### Beispiel 2

500g der im Vergleichsbeispiel erwähnten 10 bis 11 Gew.-% Al₂O₃ enthaltenden Tonerdeaufschlämmung, welche einen pH-Wert von 9 aufwies, wurden bei absatzweisem Betrieb in einen Reaktor gegeben, und zwar bei Normaldruck und 98°C. Es wurde nach Einstellung der Reaktionsbedingungen 16 h (Vergleichsversuch) mit einem üblichen Rührwerk mit einer Umfangsgeschwindigkeit von 1,6 m/s entsprechend der Rührdrehzahl von 500 U/min. gealtert. Die entsprechend dem im Vergleichsbeispiel 1 erläuterten Verfahren enthaltenen Kristallitgrößen betrugen 13,5 nm am 120 - und 12,1 nm am 020 - Reflex.

Die spezifische Oberfläche nach einer Temperaturbehandlung über 3 h bei 1200°C betrug 68 m²/g. Das Röntgenpulverdiffraktogramm dieser Probe ist in Tabelle 2 wiedergegeben und weist Signale der Theta-Phase auf. Das Aluminiumoxid liegt mit einer Phasenreinheit von größer als 98% in der Theta-Phase vor

Soweit eine Alterung unter oben beschriebenen Bedingungen über 20 h durchgeführt wird (erfindungsgemäßes Beispiel), werden Kristallitgrößen von 13,5 nm gemessen am 120 - und 13,0 nm gemessen am 020 - Reflex erhalten.

### Beispiel 3

500g der im Vergleichsbeispiel erwähnten 10 bis 11 Gew.-% Al₂O₃ bestimmten Tonerdeaufschlämmung, welche einen pH-Wert von 9 aufwies, wurden bei absatzweisem Betrieb in einen Reaktor gegeben, und zwar bei einem Reaktordruck von 3 bar entsprechend 110°C. Es wurde nach Einstellung der Reaktionsbedingungen 40h mit einem üblichen Rührwerk mit einer Umfangsgeschwindigkeit von 1,6 m/s entsprechend der Rührdrehzahl von 500 U/min. gealtert.

Die entsprechend dem im Vergleichsbeispiel erläuterten Verfahren bestimmten Kristallitgrößen betrugen 15,3 nm am 120 - und 15,3 nm am 020 - Reflex. Die spezifische Oberfläche nach einer Temperaturbehandlung über 3 h bei 1200°C betrug 67 m²/g .

### Beispiel 4

500g der im Vergleichsbeispiel erwähnten 10 bis 11 Gew.-% Al₂O₃ bestimmten Tonerdeaufschlämmung, welche einen pH-Wert von 9 aufwies, wurden bei absatzweisem Betrieb in einen Reaktor gegeben, und zwar bei einem Reaktordruck von 3 bar entsprechend 110°C. Es wurde nach Einstellung der Reaktionsbedingungen 60 h mit einem üblichen Rührwerk mit einer Umfangsgeschwindigkeit von 1,6 m/s entsprechend der Rührdrehzahl von 500 U/min. gealtert.

Die entsprechend dem im Vergleichsbeispiel erläuterten Verfahren bestimmten Kristallitgrößen betrugen 16,1 nm am 120 - und 16,5 nm am 020 - Reflex. Die spezifische Oberfläche nach einer Temperaturbehandlung über 3h bei 1200°C betrug 72 m²/g.

### Beispiel 5

600g der im Vergleichsbeispiel erwähnten 10 bis 11 Gew.-% Al₂O₃ enthaltenden Tonerdeaufschlämmung, welche einen pH-Wert von 9 aufwies, wurden 50g 20 % wässeriger Tetrenlösung zugegeben und 68 h unter Rückfluß gekocht. Dabei wurden jeweils 300g H₂O nach 1 h zugegeben. Das Gemisch wurde mit 200g H₂O verdünnt und sprühgetrocknet

Die entsprechend dem im Vergleichsbeispiel erläuterten Verfahren bestimmten Kristallitgrößen betrugen 14,4 nm am 120 - und 14,6 nm am 020 - Reflex. Die spezifische Oberfläche nach einer Temperaturbehandlung über 3h bei 1200°C betrug 81 m²/g.

### Beispiel 6

300g einer 6,02 % Aluminiumtri-n-hexanolat-Lösung in n-Hexanol wurden bei 90°C mit 360g einer 5% wäßrigen Tetrenlösung versetzt und 30 min bei 90°C gerührt Aus der Reaktionsmischung wurde das Hexanol durch azeotrope Destillation entfernt. Der Rückstand wurde anschließend bei 90°C 24h gerührt. Dabei wurden jeweils 100g H₂O nach 1h , nach 2h und nach 3h zugegeben. Das Reaktionsgemisch wurde sprühgetrocknet.

Die entsprechend dem im Vergleichsbeispiel erläuterten Verfahren bestimmten Kristallitgrößen betrugen 11,0 nm am 120 - und 11,8 nm am 020 - Reflex. Die spezifische Oberfläche nach einer Temperaturbehandlung über 3h bei 1200°C betrug 76 m²/g.

### Beispiel 7

300g einer 6,02% Aluminiumtri-n-hexanolat-Lösung in n-Hexanol wurden bei 90°C mit 360 g einer 5% wässrigen Tetrenlösung versetzt und 30 min bei 90°C gerührt. Aus der Reaktionsmischung wurde das Hexanol durch azeotrope Destillation entfernt Der Rückstand wurde anschließend bei 90°C 68 h gerührt. Dabei wurden jeweils 100 g H₂O nach 1 h , nach 2 h und nach 3 h zugegeben. Das Reaktionsgemisch wurde sprühgetrocknet

Die entsprechend dem im Vergleichsbeispiel erläuterten Verfahren bestimmten Kristallitgrößen betrugen 12,6 nm am 120 - und 16,4 nm am 020 - Reflex. Die spezifische Oberfläche nach einer Temperaturbehandlung über 3h bei 1200°C betrug 79 m²/g.

**Tabelle 1 Röntgenpulverdiffraktogramm des Beispiels 1 (Vergleichsbeispiel) mit deutlichem Anteil an Alpha-Al₂O₃**

| **D-Wert [°2θ]** | **d-Wert α [Å]** | **d-Wert** α² [Å] | **T-Breite [°2θ]** | **Höhe [counts]** | **Hintergr. [counts]** | **Rel. Int. [%]** | **Signifik.** |
|---|---|---|---|---|---|---|---|
| 16.205 | 5.46527 | 5.47872 | 0.480 | 19 | 29 | 4.1 | 1.56 |
| 19.550 | 4.53706 | 4.54822 | 0.480 | 45 | 27 | 9.5 | 2.53 |
| 21.850 | 4.06440 | 4.07439 | 0.480 | 9 | 24 | 1.9 | 0.80 |
| 25.560 | 3.48224 | 3.49081 | 0.180 | 276 | 30 | 58.5 | 7.44 |
| 31.230 | 2.86174 | 2.86878 | 0.200 | 286 | 41 | 60.7 | 2.47 |
| 32.695 | 2.73678 | 2.74351 | 0.120 | 441 | 37 | 93.7 | 1.23 |
| 32.825 | 2.72624 | 2.73294 | 0.080 | 441 | 37 | 93.7 | 0.97 |
| 35.135 | 2.55211 | 2.55838 | 0.140 | 449 | 35 | 95.4 | 4.34 |
| 36.660 | 2.44937 | 2.45539 | 0.200 | 313 | 34 | 66.5 | 1.41 |
| 37.695 | 2.38446 | 2.39032 | 0.140 | 185 | 31 | 39.3 | 2.48 |
| 38.910 | 2.31275 | 2.31844 | 0.120 | 266 | 30 | 56.4 | 0.91 |
| 39.855 | 2.26007 | 2.26563 | 0.160 | 169 | 30 | 35.9 | 0.92 |
| 41.715 | 2.16349 | 2.16881 | 0.480 | 21 | 27 | 4.5 | 1.69 |
| 43.305 | 2.08767 | 2.09280 | 0.160 | 396 | 27 | 84.1 | 6.77 |
| 44.785 | 2.02205 | 2.02703 | 0.320 | 282 | 26 | 59.9 | 9 47 |
| 45.605 | 1.98758 | 1.99247 | 0.360 | 137 | 25 | 29.1 | 3.48 |
| 46.515 | 1.95080 | 1.95560 | 0.240 | 90 | 24 | 19.2 | 2.18 |
| 47.630 | 1.90770 | 1.91239 | 0.120 | 185 | 23 | 39.3 | 1.31 |
| 50.680 | 1.79981 | 1.80424 | 0.320 | 77 | 22 | 16.4 | 4.82 |
| 51.520 | 1.77242 | 1.77678 | 0.320 | 22 | 22 | 4.7 | 0.78 |
| 52.450 | 1.74317 | 1.74745 | 0.100 | 154 | 22 | 32.7 | 1.18 |
| 57.415 | 1.60366 | 1.60761 | 0.160 | 317 | 25 | 67.3 | 6.46 |
| 58.730 | 1.57085 | 1.57471 | 0.240 | 26 | 25 | 5.5 | 0.76 |
| 59.820 | 1.54480 | 1.54861 | 0.120 | 114 | 25 | 24.3 | 1.93 |
| 61.240 | 1.51234 | 1.51606 | 0.160 | 74 | 25 | 15.7 | 1.05 |
| 62.295 | 1.48924 | 1.49291 | 0.400 | 71 | 24 | 15.0 | 2.02 |
| 63.850 | 1.45667 | 1.46025 | 0.240 | 137 | 24 | 29.1 | 3.28 |
| 64.165 | 1.45028 | 1.45385 | 0.120 | 98 | 24 | 20.8 | 1.06 |
| 65.450 | 1.42488 | 1.42838 | 0.320 | 59 | 23 | 12.6 | 1.06 |
| 66.475 | 1.40537 | 1.40883 | 0.100 | 324 | 24 | 68.8 | 0.85 |
| 67.395 | 1.38841 | 1.39182 | 0.440 | 471 | 23 | 100.0 | 18.43 |
| 68.155 | 1.37477 | 1.37815 | 0.100 | 190 | 23 | 40.4 | 0.92 |
| 72.900 | 1.29654 | 1.29973 | 0.320 | 41 | 21 | 8.7 | 1.33 |
| 73.700 | 1.28443 | 1.28759 | 0.400 | 48 | 21 | 10.1 | 2.55 |
| 75.460 | 1.25878 | 1.26188 | 0.560 | 28 | 19 | 6.0 | 4.30 |
| 76.800 | 1.24012 | 1.24317 | 0.160 | 58 | 18 | 12.3 | 1.06 |

| | | | | | | | |
|---|---|---|---|---|---|---|---|
| Meßparameter: Start-Winkel [°2θ]: 5.010; End-Winkel [°2θ]: 79.990; Start d-Wert [Å]: 17.62435; End d-Wert [Å]: 1.19850; Anoden Material: Cu, α¹ Wellenlänge [Å]: 1.54060; α² Wellenlänge [Å]: 1.54439 | | | | | | | |

**Tabelle 2 Röntgenpulverdiffraktogramm des Beispiels 2 (Al₂O₃ mit > 98% Theta-Phase)**

| **D-Wert [°2θ]** | **d-Wert α¹ [Å]** | **d-Wert α² [Å]** | **T-Breite [°2θ]** | **Höhe [counts]** | **Hintergr. [counts]** | **Rel.Int. [%]** | **Signifik.** |
|---|---|---|---|---|---|---|---|
| 16.240 | 5.45357 | 5.46699 | 0.400 | 40 | 28 | 6.6 | 1.55 |
| 19.495 | 4.54974 | 4.56093 | 0.400 | 56 | 30 | 9.4 | 1.21 |
| 25.230 | 3.52704 | 3.53571 | 0.800 | 11 | 28 | 1.8 | 1.26 |
| 31.130 | 2.87070 | 2.87777 | 0.320 | 292 | 42 | 48.7 | 4.94 |
| 32.685 | 2.73759 | 2.74433 | 0.180 | 600 | 42 | 100.0 | 3.57 |
| 32.790 | 2.72907 | 2.73578 | 0.060 | 562 | 42 | 93.6 | 0.80 |
| 34.845 | 2.57268 | 2.57901 | 0.320 | 102 | 41 | 17.0 | 2.05 |
| 36.635 | 2.45098 | 2.45701 | 0.320 | 372 | 40 | 62.1 | 5.21 |
| 38.820 | 2.31791 | 2.32361 | 0.280 | 266 | 41 | 44.3 | 4.26 |
| 39.890 | 2.25816 | 2.26372 | 0.240 | 196 | 40 | 32.7 | 1.80 |
| 43.295 | 2.08813 | 2.09326 | 0.320 | 15 | 29 | 2.5 | 1.01 |
| 44.720 | 2.02484 | 2.02982 | 0.360 | 361 | 28 | 60.1 | 12.86 |
| 46.530 | 1.95020 | 1.95500 | 0.480 | 59 | 27 | 9.9 | 0.93 |
| 47.585 | 1.90940 | 1.91410 | 0.280 | 196 | 25 | 32.7 | 5.21 |
| 50.585 | 1.80297 | 1.80741 | 0.240 | 85 | 24 | 14.1 | 2.69 |
| 51.470 | 1.77403 | 1,77839 | 0.320 | 31 | 23 | 5.2 | 1.18 |
| 52.455 | 1.74301 | 1.74730 | 0.320 | 22 | 23 | 3.7 | 1.03 |
| 56.580 | 1.62533 | 1.62933 | 0.640 | 18 | 23 | 2.9 | 0.99 |
| 57.365 | 1.60494 | 1.60889 | 0.320 | 20 | 24 | 3.4 | 0.75 |
| 58.755 | 1.57024 | 1.57410 | 0.240 | 37 | 24 | 6.2 | 2.28 |
| 59.850 | 1.54410 | 1.54790 | 0.200 | 139 | 24 | 23.2 | 1.67 |
| 62.310 | 1.48892 | 1.49258 | 0.400 | 100 | 24 | 16.7 | 2.83 |
| 63.925 | 1.45514 | 1.45872 | 0.400 | 164 | 25 | 27.3 | 10.08 |
| 65.355 | 1.42672 | 1.43023 | 0.480 | 69 | 26 | 11.5 | 2.58 |
| 66.450 | 1.40584 | 1.40930 | 0.240 | 228 | 25 | 38.0 | 2.47 |
| 67.395 | 1.38841 | 1.39182 | 0.600 | 524 | 26 | 87.4 | 39.85 |
| 72.845 | 1.29738 | 1.30057 | 0.480 | 50 | 24 | 8.4 | 2.92 |
| 73.715 | 1.28420 | 1.28736 | 0.400 | 64 | 23 | 10.7 | 3.36 |
| 75.295 | 1.26113 | 126423 | 0.400 | 27 | 20 | 4.5 | 1.56 |
| 77320 | 1.23308 | 1.23611 | 0.960 | 15 | 18 | 2.5 | 3.48 |

| | | | | | | | |
|---|---|---|---|---|---|---|---|
| Meßparameter wie in Tabelle 1 | | | | | | | |

**Tabelle 3 Röntgenpulverdiffraktogramm eines erfindungsgemäßen Aluminiumoxides in der Delta-Phase**

| **D-Wert [°2θ]** | **d-Wert α¹ [Å]** | **d-Wert α² [Å]** | **T-Breite [°2θ]** | **Höhe [counts]** | **Hintergr. [counts]** | **Rel. Int**. **[%]** | **Signifik.** |
|---|---|---|---|---|---|---|---|
| 19.605 | 4.52446 | 4.53559 | 0.480 | 21 | 49 | 6.2 | 0.82 |
| 32,855 | 2.72382 | 2.73052 | 0.560 | 69 | 139 | 20.3 | 2.95 |
| 36.865 | 2.43621 | 2.44221 | 0.320 | 114 | 132 | 33.8 | 0.95 |
| 39.570 | 2.27568 | 2.28128 | 0.880 | 117 | 90 | 34.5 | 10.25 |
| 45,475 | 1.99296 | 1.99787 | 0.560 | 272 | 58 | 80.4 | 7.14 |
| 46,385 | 1.95596 | 1.96077 | 0.480 | 146 | 56 | 43.2 | 2.24 |
| 50.865 | 1.79370 | 1.79811 | 0.800 | 10 | 40 | 3.0 | 1.35 |
| 58.990 | 1.56455 | 1.56839 | 0.140 | 11 | 61 | 3.2 | 0.85 |
| 59.985 | 1.54095 | 1.54474 | 0.800 | 18 | 74 | 5.5 | 1.38 |
| 66.470 | 1.40547 | 1.40892 | 0.560 | 279 | 83 | 82.4 | 3.34 |
| 67.220 | 1.39160 | 1.39502 | 0.240 | 339 | 76 | 100.0 | 0.99 |

| | | | | | | | |
|---|---|---|---|---|---|---|---|
| Meßparameter wie in Tabelle 1 | | | | | | | |

## Patentansprüche

1. Kristalline böhmitische und/oder pseudo-böhmitische Tonerde deren Kristallitgröße bestimmt am 020 - Reflex in nm größer als die um 0,5 nm verminderte, gemessene Kristallitgröße, bestimmt am 120 - Reflex ist und die Kristallitgröße gemessen am 020 - Reflex 6 nm und größer beträgt.

2. Kristalline böhmitische und/oder pseudo-böhmitische Tonerde gemäß Anspruch 1, **dadurch gekennzeichnet, dass** die Kristallitgröße bestimmt in nm am 020-Reflex größer als die Kristallitgröße bestimmt in nm am 120 - Reflex ist.

3. Kristalline böhmitische und/oder pseudo-böhmitische Tonerde gemäß einem der vorhergehenden Ansprüche, **dadurch gekennzeichnet, dass** die Kristallitgröße gemessen am 020 - Reflex 6 bis 50 nm, vorzugsweise 10 bis 50 nm, beträgt.

4. Verfahren zur Herstellung kristalliner böhmitischer und/oder pseudoböhmitischer Tonerde deren Kristallitgröße bestimmt am 020 - Reflex in nm größer als die um 0,5 nm verminderte, gemessene Kristallitgröße, bestimmt am 120 - Reflex ist, und die Kristallitgröße gemessen am 020 - Reflex 6 nm und größer beträgt, wobei man Aluminium-Sauerstoff-Verbindungen einer hydrothermalen Langzeitalterung in Gegenwart von Wasser bei 60 bis 240 °C über zumindest 20 h aussetzt und während der Alterung eine geringe Scherwirkung ausgeübt wird, wie sie von einem Rührer ausgeübt wird, der mit einer Umfangsgeschwindigkeit von 0,5 bis 3 m/s betrieben wird.

5. Verfahren zur Herstellung kristalliner böhmitischer und/oder pseudoböhmitischer Tonerde deren Kristallitgröße bestimmt am 020 - Reflex in nm größer als die um 0,5 nm verminderte, gemessene Kristallitgröße, bestimmt am 120 - Reflex ist, **dadurch gekennzeichnet, dass** man Aluminium-Sauerstoff-Verbindungen einer hydrothermalen Alterung in Gegenwart von Wasser und zumindest zweikernigen Basen bei 30 bis 240 °C für 0,5 bis 170 h aussetzt.

6. Phasenreines Aluminiumoxid in der Theta- oder Delta-Phase herstellbar aus einer kristallinen böhmitischen und/oder pseudo-böhmitischen Tonerde gemäß einem der Ansprüche 1 oder 2 durch Kalzinieren bei einer Temperatur von 800 bis 1500°C für zumindest 0,5 h, wobei das Aluminiumoxid phasenrein in der Theta- oder Delta-Phase vorliegt das Aluminiumoxid nach einer Temperaturbehandlung durch Calzinierung bei 1200°C über 3 h eine Oberfläche von größer 60 m²/g als Temperaturstabilitätskriterium aufweist und das Aluminiumoxid Porenvolumina bestimmt mit Hilfe der Quecksilberpenetrationsmethode im Porenradienbereich von 1,8 bis 100 nm von größer 0,6 cm³/g aufweist.

7. Phasenreines Aluminiumoxid gemäß Anspruch 6, **dadurch gekennzeichnet, dass** das Aluminiumoxid zu größer 99,9 Atom% ausschließlich aus Aluminium, Sauerstoff und/oder Wasserstoff besteht.

8. Verwendung der Aluminiumoxide gemäß Anspruch 6 oder 7 als Katalysator oder Katalysatorträgermaterial.

9. Verfahren zur Herstellung von phasenreinem Aluminiumoxid in der Theta- oder Delta-Phase indem man böhmitische und/oder pseudo-böhmitische Tonerde, deren Kristallitgröße bestimmt am 020 - Reflex in nm größer als die um 0,5 nm verminderte, gemessene Kristallitgröße, bestimmt am 120 - Reflex ist, und die Kristallitgröße gemessen am 020 - Reflex 6 nm und größer beträgt, zu Aluminiumoxid in der Theta- oder Delta-Phase bei einer Temperatur von 800 bis 1500°C für zumindest 0,5 h calziniert, wobei das erhaltene Aluminiumoxid Porenvolumina bestimmt mit Hilfe der Quecksilberpenetrationsmethode im Porenradienbereich von 1,8 bis 100 nm von größer 0,6 cm³/g aufweist und das Aluminiumoxid eine Temperaturstabilität aufweist, so dass dieses nach einer Temperaturbehandlung durch Calzinierung bei 1200°C über 3 h immer noch eine Oberfläche von größer 60 m²/g aufweist.

## Claims

1. Crystalline boehmitic alumina and/or pseudo boehmitic alumina having a crystallite size that, determined on the 020 reflex in nm, is larger than the measured crystallite size determined on the 120 reflex reduced by 0.5 nm and the crystallite size determined on the 020 reflex is 6 nm or greater.

2. Crystalline boehmitic alumina and/or pseudo boehmitic alumina according to claim 1, **characterized in that** the crystallite size determined in nm on the 020 reflex is greater than the crystallite size determined in nm on the 120 reflex.

3. Crystalline boehmitic alumina and/or pseudo boehmitic alumina according to one of the claims, **characterized in that** the crystallite size determined on the 020 reflex is from 6 to 50 nm, preferably from 10 to 50 nm.

4. A method of preparing crystalline boehmitic alumina and/or pseudo boehmitic alumina having a crystallite size that, determined on the 020 reflex in nm, is larger than the measured crystallite size determined on the 120 reflex reduced by 0.5 nm and the crystallite size determined on the 020 reflex is 6 nm or greater, wherein aluminium oxygen compounds are exposed to a hydrothermal aging in the presence of water at 60 to 240°C for at least 20 hours and during the aging a low shearing action is applied as it is applied by a stirrer, which is operated with a peripheral speed of 0.5 to 3 m/s.

5. A method of preparing crystalline boehmitic alumina and/or pseudo boehmitic alumina having a crystallite size that, determined on the 020 reflex in nm, is larger than the measured crystallite size determined on the 120 reflex reduced by 0.5 nm, **characterized in that** aluminium-oxygen compounds are exposed to hydrothermal aging in the presence of water and at least bidentate bases at 30 to 240°C for 0,5 to 170 hours.

6. Pure-phase aluminium oxide in the theta or delta phase preparable from a crystalline boehmitic alumina and/or pseudo boehmitic alumina according to one of claims 1 or 2 by calcination at a temperature of from 800 to 1500°C for at least 0.5 hours, wherein the aluminium oxide is pure-phase present in the theta or delta phase after thermal treatment by calcination at 1,200°C for 3 hours the aluminium oxide has a surface area of greater than 60 m²/g as criteria for temperature stability and the aluminium oxide has pore volumes of greater than 0.6 cm³/g determined by the mercury penetration method in the pore radius range of from 1.8 to 100 nm.

7. Pure-phase aluminium oxide according to claim 6, **characterized in that** the aluminium oxide consists to greater than 99.9 atom% exclusively out of aluminium, oxygen and/or hydrogen.

8. Use of the aluminium oxides according to one of the claims 6 or 7 as catalyst or catalyst carrier material.

9. A method of preparing pure-phase aluminium oxide in the theta or delta phase by calcination of boehmitic alumina and/or pseudo boehmitic alumina having a crystallite size that, determined on the 020 reflex in nm, is larger than the measured crystallite size determined on the 120 reflex reduced by 0.5 nm and the crystallite size determined on the 020 reflex is from 6 nm and greater to aluminium oxide in the theta or delta phase at a temperature of from 800 to 1500°C for at least 0.5 hours, wherein the so obtained aluminium oxide has pore volume of greater than 0.6 cm³/g determined by the mercury penetration method in the pore radius range of from 1.8 to 100 nm and the aluminium oxide has a temperature stability, so that after thermal treatment by calcination at 1,200°C for 3 hours the aluminium oxide still has a surface area of greater than 60 m²/g.

## Revendications

1. Alumine boehmitique et/ou pseudo-boehmitique cristalline, dont la taille des cristallites déterminée à une réflexion de 020 en nm est supérieure à la taille des cristallites mesurée et réduite de 0,5 nm, déterminée à une réflexion de 120, et la taille des cristallites mesurée à une réflexion de 020 est de 6 nm et plus.

2. Alumine boehmitique et/ou pseudo-boehmitique cristalline selon la revendication 1, **caractérisée en ce que** la taille des cristallites déterminée en nm à une réflexion de 020 est supérieure à la taille des cristallites déterminée en nm à une réflexion de 120.

3. Alumine boehmitique et/ou pseudo-boehmitique cristalline selon l'une des revendications précédentes, **caractérisée en ce que** la taille des cristallites mesurée à une réflexion de 020 est de 6 à 50 nm, de préférence de 10 à 50 nm.

4. Procédé de production d'alumine boehmitique et/ou pseudo-boehmitique cristalline, dont la taille des cristallites déterminée en nm à une réflexion de 020 est supérieure à la taille des cristallites mesurée et réduite de 0,5 nm, déterminée à une réflexion de 120, et la taille des cristallites mesurée à une réflexion de 020 est de 6 nm et plus, dans lequel on soumet les composés d'aluminium - oxygène à un vieillissement hydrothermique à long terme en présence d'eau à une température de 60 à 240°C pendant au moins 20 h et en ce que l'on exerce une faible action de cisaillement pendant le vieillissement, telle qu'elle est exercée par un agitateur, qui tourne à une vitesse de révolution de 0,5 à 3 m/s.

5. Procédé de production d'alumine boehmitique et/ou pseudo-boehmitique cristalline, dont la taille des cristallites déterminée en nm à une réflexion de 020 est supérieure à la taille des cristallites mesurée et réduite de 0,5 nm, déterminée à une réflexion de 120, **caractérisé en ce que** l'on soumet des composés d'aluminium-oxygène à un vieillissement hydrothermique en présence d'eau et de bases au moins binucléaires à une température de 30 à 240°C pendant 0,5 à 170 h.

6. Oxyde d'aluminium à phases pures en phase thêta ou delta, pouvant être fabriqué à partir d'une alumine boehmitique et/ou pseudo-boehmitique cristalline selon l'une des revendications 1 ou 2 par calcination à une température de 800 à 1500°C pendant au moins 0,5 h, dans lequel l'oxyde d'aluminium se présente sous une forme de phase pure en phase thêta ou delta, l'oxyde d'aluminium présente une surface supérieure à 60 m²/g comme critère de stabilité à la température après un traitement thermique par calcination à 1200°C pendant 3 h et l'oxyde d'aluminium présente des volumes de pores déterminés à l'aide de la méthode de pénétration du mercure dans la plage des rayons de pores de 1,8 à 100 nm qui sont supérieurs à 0,6 cm³/g.

7. Oxyde d'aluminium à phases pures selon la revendication 6, **caractérisé en ce que** l'oxyde d'aluminium se compose à plus de 99,9 % atomiques exclusivement d'aluminium, d'oxygène et/ou d'hydrogène.

8. Utilisation des oxydes d'aluminium selon la revendication 6 ou 7 comme catalyseur ou matériau support catalytique.

9. Procédé de production d'oxyde d'aluminium à phases pures en phase thêta ou delta consistant à calciner de l'alumine boehmitique et/ou pseudo-boehmitique cristalline, dont la taille des cristallites déterminée en nm à une réflexion de 020 est supérieure à la taille des cristallites mesurée et réduite de 0,5 nm, déterminée à une réflexion de 120, et la taille des cristallites mesurée à une réflexion de 020 est de 6 nm et plus, en oxyde d'aluminium en phase thêta ou delta à une température de 800 à 1500°C pendant au moins 0,5 h, dans lequel l'oxyde d'aluminium obtenu présente des volumes de pores déterminés à l'aide de la méthode de pénétration du mercure dans la plage des rayons de pores de 1,8 à 100 nm qui sont supérieurs à 0,6 cm³/g et l'oxyde d'aluminium présente une stabilité à la température telle que celui-ci présente toujours une surface supérieure à 60 m²/g après un traitement thermique par calcination à 1200°C pendant 3 h.
